# EUROPÄISCHE PATENTSCHRIFT

(11) **EP 2 801 660 B1**
(45) Veröffentlichungstag und Bekanntmachung des Hinweises auf die Patenterteilung: **16.09.2015**
(21) Anmeldenummer: 13167232.1
(22) Anmeldetag: 10.05.2013
(51) Int. Cl.: D21G 1/00, B29C 33/04, B29C 43/46, B29C 43/24, B29C 47/84, D21F 7/02, B29C 43/52

(54) **Antrieb und System mit zumindest einer angetriebenen Walze oder Extruderschnecke**
Drive and system comprising at least one driven roller or extruder screw
Entraînement et système comprenant au moins un cylindre entraîné ou une vis sans fin d'extrusion

(43) Veröffentlichungstag der Anmeldung: 12.11.2014
(73) Patentinhaber: Starlinger & Co. Gesellschaft m.b.H., 1060 Wien (AT)
(72) Erfinder: Höller, Harald, 4170 Haslach (AT)
(74) Vertreter: Schwarz & Partner

(56) Entgegenhaltungen:
- EP-A2- 1 749 929
- WO-A1-01/86780
- DE-B- 1 183 230
- US-A- 4 887 907

## Beschreibung

Glättwerke sowie Kalander sind seit langer Zeit bekannt und dienen zur Herstellung von Flachfolienbahnen sowie Platten, insbesondere aus Kunststoffen, zur Weiterverarbeitung an Tiefziehanlagen. Zur Herstellung von Flachfolienbahnen kommt zumeist eine Anordnung von mehreren Glättwalzen zum Einsatz, wobei diese Glättwalzen zumeist mit Kühlmittelkanälen ausgeführt werden um, ein rasches Abkühlen des Produktes bzw. der Schmelze zu ermöglichen.

Weiters ist es bekannt, solche Walzen mit relativ geringen Drehzahlen im Bereich von 1 bis 500 U/min zu betreiben. Da herkömmliche elektrische Antriebsmotoren zumeist höhere Drehzahlen aufweisen bzw. in den genannten niedrigen, Drehzahlbereichen nicht optimal betrieben werden können, ist eine Untersetzung der Drehzahl in Form eines herkömmlichen Getriebes, Ketten- oder Riemenantriebes oder einer Kombination von diesen erforderlich. Bekanntermaßen weisen mechanische Getriebe sowie Kettentriebe durch die Verzahnung typischerweise ein Spiel auf, welches sich in sogenannten Rattermarken im Produkt niederschlägt und die erreichbare Folienqualität negativ beeinflusst. Weiters ist bekannt, dass Riemenantriebe zusätzlich einen Schlupf aufweisen, welcher sich ebenfalls negativ auf das Produkt auswirkt.

Getriebe sowie Ketten- und Riemenantriebe stellen zusätzlich Herausforderungen an Sicherheit, Schmierung und Wartung dar, welche sich im Betrieb hinsichtlich Gefährdungspotenzial und Betriebskosten als Nachteil erweisen.

Weiters ist bekannt, dass bei Glättwerken die Walzendrehzahlen aus Gründen der Qualitätssicherung im Betrieb genau bestimmt werden müssen, wozu Drehzahlgeber, z.B. in Form eines Encoders, an der Motorabtriebswelle angebracht werden.

Jüngere Ausführungsformen des Antriebsstranges von Glättwalzen und dergleichen werden mit sogenannten Direktantrieben ausgerüstet, bei denen der Motor unmittelbar mit der Antriebswelle der Glättwalze verbunden ist, wodurch zwischengeschaltete Getriebe oder Ketten- bzw. Riemenantriebe entfallen.

Aus der EP 1 340 608 A ist eine Kunststofffolien-Glättvorrichtung mit einer Glättwalze und einem direkten Glättwalzenantrieb bekannt. Der Glättwalzenantrieb besteht aus einem Antriebsgehäuse und einem Antriebsmotor mit Stator und Rotor. Im Antriebsgehäuse sind der zylinderförmige Stator und der zylinderförmige Rotor koaxial zueinander angeordnet, wobei der Stator den Rotor umgibt. Der Rotor ist ohne Zwischenschaltung eines Getriebes an eine Antriebswelle der Glättwalze angeschlossen, wobei der zylinderförmige Rotor einen als Hohlzylinder ausgebildeten Teil einer Anschlusshülse umgibt, an die der Rotor drehfest angeschlossen ist, wobei die Antriebswelle der Glättwalze mit der Anschlusshülse drehfest verbunden ist. Nachteilig an diesem Glättwerk mit Direktantrieb ist, dass der Motor nur einmal gelagert ist und sich sein Rotor daher nur dann drehen kann, wenn er in korrekter Lage auf der Antriebswelle der Glättwalze sitzt. Dies ist bei Montage vor Ort aufgrund der hohen magnetischen Kräfte im Motor aber nur schwer zu bewerkstelligen. Insbesondere neigt eine solche Ausführungsform zur Lager schädigenden Fehlausrichtung von Motor und Antriebswelle.

Eine weitere Hauptaufgabe von Glätt-, Gieß-, Kalander- oder Kühlwalzen ist die der Kühlung des Produktes. Dazu wird ein flüssiges oder gasförmiges Kühlmedium durch in der Walze eingearbeitete Kühlkanäle geleitet und somit ein Abtransport der durch das Produkt in die Walzen eingebrachten Wärmeenergie gewährleistet. Der Anschluss an eine Kühlmittelversorgung wird mittels sogenannten Drehdurchführungen bewerkstelligt. Aufgrund der Bauform herkömmlicher Direktantriebe, insbesondere der Platzierung des Drehzahlgebers, ist es erforderlich eine 2-Wege Drehdurchführung vorzusehen. Aufgrund der erforderlichen Kühlleistung ergibt sich ein Mindestströmungsquerschnitt der Kühlkanäle, welcher am Wellenende, an dem die Drehdurchführung sitzt, in doppelter Ausführung (Vorund Rücklauf) vorhanden sein muss und die Dimensionierung des Wellenendes und somit der Walzenlagerung dahingehend beeinflusst, dass entweder die Lagerung an beiden Enden entsprechend überdimensioniert werden muss und dadurch teuer ist, oder eine asymmetrische Lagerung, das heißt ungleich große Lager an den beiden Wellenenden, erforderlich ist. Asymmetrische Lagerungen weisen in Hinblick auf ungleichen Verschleiß und Erhöhung der Anzahl von unterschiedlichen Ersatzteilen weitere Nachteile auf. Weiters sind die Herstellungskosten der erforderlichen 2-Wege Drehdurchführungen bezogen auf den Kühlmediendurchsatz wesentlich höher als bei 1-Wege Drehdurchführungen. Prinzipbedingt sind 2-Wege Drehdurchführungen auch aufwendiger in der Abdichtung gegenüber der Umgebung und innerhalb der beiden Kühlmittelwege, wodurch die Wartungskosten im Vergleich höher sind. Ein weiterer Nachteil ist, dass die erforderliche Motorkühlung nur über den Außenmantel des Antriebs bewerkstelligt wird und dadurch eine höhere Wicklungstemperatur im Motor entsteht, welche sich wiederum in einer geringeren Lebensdauer des Antriebes niederschlägt.

Der vorliegenden Erfindung liegt die Aufgabe zugrunde, einen direkten Antrieb bereitzustellen, dem nicht die oben erläuterten Nachteile des Standes der Technik anhaften.

Der vorliegenden Erfindung liegt weiters die Aufgabe zugrunde, ein System mit Kühlwalzen, Gießwalzen, Rollen, Glättwalzen, Kalanderwalzen und/oder Verstreckwalzen bereitzustellen, wobei zumindest einige der genannten Walzen mit einem Direktantrieb ausgestattet sind, dem nicht die oben erläuterten Nachteile des Standes der Technik anhaften.

Es ist insbesondere eine Aufgabe der Erfindung, einen Antrieb bereitzustellen, der neben der Übertragung des erforderlichen Antriebsdrehmomentes zusätzlich als Transporthilfe für flüssige oder gasförmige Kühl- oder Heizmedien dient.

In einem weiteren Aspekt betrifft die Erfindung einen Extruder mit zumindest einer beheizten oder gekühlten Extruderschnecke. Solchen Extrudern liegt dieselbe Problematik zugrunde wie den oben erläuterten bekannten Glättwerken mit Glättwalzen. Der vorliegenden Erfindung liegt somit auch die Aufgabe zugrunde, eine Extruderschnecke eines solchen Extruders mit einem direkten Antrieb auszustatten, dem nicht die oben erläuterten Nachteile des Standes der Technik herkömmlicher Extruderantriebe anhaften

Die Erfindung löst die gestellten Aufgaben durch Bereitstellen eines Antriebs mit den Merkmalen des Anspruchs 1 sowie durch Bereitstellen eines Systems mit zumindest einer Kühlwalze, Gießwalze, Rolle, Glättwalze, Kalanderwalze und/oder Verstreckwalze oder eines Extruders mit einer Extruderschnecke, wobei zumindest eine Walze bzw. eine Extruderschnecke mit einem erfindungsgemäßen Antrieb verbunden ist.

Der erfindungsgemäße Antrieb für eine Walze oder Schnecke umfasst eine Antriebswelle und einen elektrischen Antriebsmotor mit einem Rotor und einem den Rotor umgebenden Stator. Der Rotor ist drehfest an die Antriebswelle anschließbar bzw. angeschlossen. Die Antriebswelle ist an einem Anschlussende drehfest und koaxial mit der Walze oder Schnecke verbunden, wobei der Begriff "verbunden" auch einschließt, dass die Antriebswelle mit der Walze oder Schnecke einstückig ausgebildet ist. Der Stator wird von einem feststehenden Bauteil des Antriebs drehfest gehalten. Der Rotor ist mit einem dem Anschlussende der Antriebswelle zugewandten Motorlager und mit einem vom Anschlussende der Antriebswelle abgewandten Motorlager an einem Motorgehäuse axial drehbar gelagert. Die Antriebswelle ist koaxial zum Rotor durch den Antriebsmotor hindurch und auf der dem Anschlussende der Antriebswelle abgewandten Seite über den Antriebsmotor hinaus geführt, wo sie ein freies Ende aufweist. Die Antriebswelle ist als Hohlwelle mit einem axialen Temperiermediumkanal ausgebildet, der am freien Ende der Antriebswelle mit einem Temperiermediumanschluss gekoppelt ist.

Der erfindungsgemäße Antrieb für eine Walze oder Schnecke bietet den großen Vorteil, dass der Rotor sich frei drehen kann, auch wenn er nicht mit der Antriebswelle verbunden ist. Dies ermöglicht eine einfache Anbringung und einen Austausch vor Ort, ohne dass bei der Montage komplizierte und schwierig zu realisierende geometrische Einstellungen der Position des Rotors in Bezug auf die Antriebswelle vorgenommen werden müssen. Der erfindungsgemäße Antrieb ist wesentlich langlebiger als bekannte Direktantriebe, da die geometrischen Anforderungen exakter eingehalten werden können als beim Stand der Technik, wodurch sich die Lagerbelastung signifikant reduziert. Außerdem wird der Einfluss von Bauteiltoleranzen geringer als beim Stand der Technik.

Bei manchen Walzensystemen, insbesondere aber auch bei Extrudern, sind die Walzen bzw. die Extruderschnecke nur einseitig auf der Seite des Antriebs gelagert. Bei solchen Ausführungsformen kann der zweiseitig gelagerte Antrieb zusätzliche Stabilität für die Antriebswelle bieten.

Da die Antriebswelle als Hohlwelle ausgebildet ist, die einen axialen Temperiermediumkanal aufweist, der am freien Ende der Antriebswelle mit einem Temperiermediumanschluss gekoppelt ist, ist es möglich, den Motor mittels des Temperiermediums innerhalb eines gewünschten Betriebstemperaturbereichs zu halten.

Wenn der Temperiermediumkanal der Antriebswelle mit zumindest einem Temperiermediumkanal der Walze oder Schnecke gekoppelt wird, so kann durch den Temperiermediumkanal der Antriebswelle hindurchfließendes Temperiermedium die Walze oder Schnecke innerhalb eines gewünschten Betriebstemperaturbereichs halten.

In einer bevorzugten Ausführungsform ist der Temperiermediumanschluss als 1-Weg-Drehdurchführung ausgebildet, wodurch der Durchmesser der Antriebswelle verringert werden kann und symmetrische Motorlager verwendet werden können. Der Zufluss oder Abfluss des gasförmigen oder flüssigen Temperiermediums erfolgt durch die 1-Weg-Drehdurchführung, der Abfluss oder Zufluss des Temperiermediums durch die Temperierkanäle der Walze oder Schnecke.

Trotz der beschriebenen Vorteile von 1-Weg-Drehdurchführungen kann es sich bei manchen Anwendungen des erfindungsgemäßen Antriebs als günstig erweisen, wenn der Temperiermediumanschluss als 2-Weg-Drehdurchführung mit Hin-und Rücklauf ausgebildet ist. Dies trifft insbesondere auf Extruder zu, bei denen es nicht möglich ist, das ausgangsseitige Ende der Extruderschnecke mit einem Temperiermediumanschluss zu versehen. Andererseits ist der Durchmesser der Antriebswelle von Extruderschnecken meist so groß, dass die größere Bauweise von 2-Weg-Drehdurchführungen in Kauf genommen werden kann.

Gemäß einem weiteren Aspekt der Erfindung ist die Fließrichtung des Temperiermediums in den bzw. aus dem Temperiermediumkanal der Antriebswelle umschaltbar. Dies kann beispielsweise dazu benutzt werden, den Motor bei kalten Umgebungsbedingungen vor Kondensatbildung zu schützen.

Da beim erfindungsgemäßen Antrieb die Antriebswelle ein freies Ende aufweist, ist es möglich, zur Überwachung der Drehgeschwindigkeit der Antriebswelle und der damit verbundenen Walze oder Schnecke einen die Antriebswelle umgebenden Drehzahlgeber vorzusehen. Diese ringförmige Anordnung des Drehzahlgebers, der beispielsweise an einem Motorlager montiert ist, verlängert nicht die Bauform des Antriebs und behindert - im Gegensatz zu axialen Drehzahlgeberanordnungen beim Stand der Technik - nicht die endseitige Anbringung einer Drehdurchführung für das Temperiermedium.

In einer bevorzugten Ausführungsform des erfindungsgemäßen Antriebs ist der Stator mit dem Motorgehäuse drehfest verbunden und das Motorgehäuse drehfest mit genau einem feststehenden Support verbindbar. Dies ermöglicht einen einfachen Austausch des Motors vor Ort, ohne dass komplizierte Einstellungsarbeiten vonnöten wären und garantiert einen sicheren, geometrisch ausgerichteten Sitz des Antriebsmotors. Wenn das Motorgehäuse mit dem feststehenden Support über ein zwischengeschaltetes, elastisches Pufferelement verbunden ist, werden Bauteiltoleranzen ausgeglichen und Lagerspannungen verhindert.

Für eine schnell vor Ort zu bewerkstelligende, aber dennoch verlässliche, mit wenigen Bauteilen realisierbare und geringen Platzbedarf aufweisende Verbindung zwischen dem Rotor und der Antriebswelle ist weiters vorgesehen, dass der Rotor mit der Antriebswelle mittels einer auf der Mantelfläche der Antriebswelle sitzenden Klemmvorrichtung verbunden wird. Die Klemmvorrichtung ermöglicht eine zentrierte, spielfreie Verbindung zwischen Rotor und Antriebswelle.

Zur Aufrechterhaltung der koaxialen Anordnung von Rotor und Antriebswelle dient eine Passhülse zwischen dem Rotor und der Antriebswelle, die auf der Seite des freien Endes der Antriebswelle angeordnet ist.

Die Erfindung wird nun anhand eines Ausführungsbeispiels unter Bezugnahme auf die Zeichnungen näher erläutert. In den Zeichnungen zeigen:
Fig. 1 eine stirnseitige Ansicht eines Systems mit einer Walze und einem erfindungsgemäßen Direktantrieb der Walze; und
Fig. 2 einen Schnitt entlang der Linie A-A von Fig. 1.

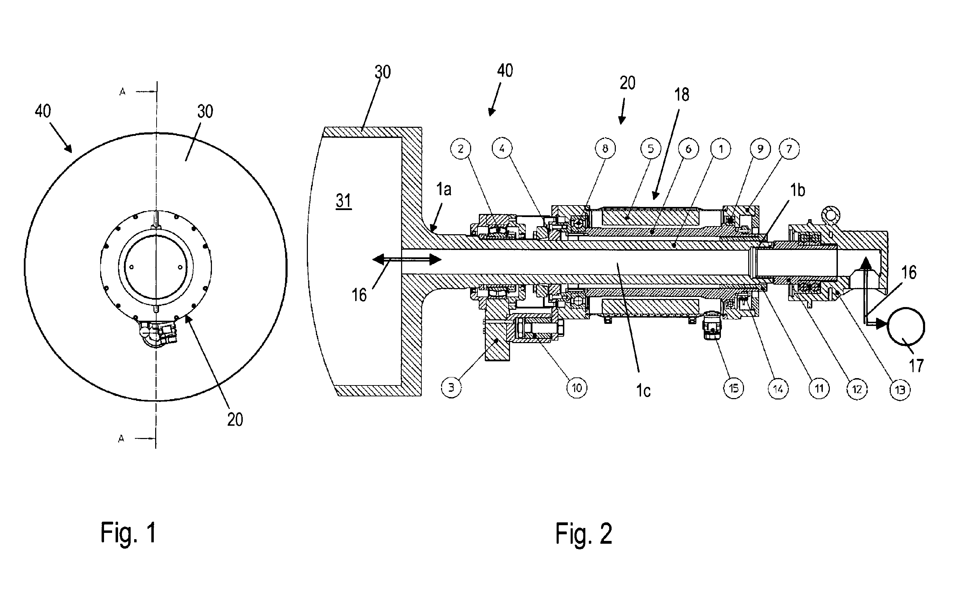

Fig. 1 zeigt ein System 40 mit einer Walze 30 und einem Antrieb 20. Die Walze 30 ist entweder als Kühlwalze, Gießwalze, Rolle, Glättwalze, Kalanderwalze und/oder Verstreckwalze ausgebildet. Alternativ zur Walze könnte auch ein Extruder mit einer vom Antrieb 20 angetriebenen Extruderschnecke vorgesehen sein.

Der Antrieb umfasst eine Antriebswelle 1 und einen elektrischen Antriebsmotor 18 mit einem Rotor 6 und einem den Rotor koaxial umgebenden, zylindrischen Stator 5 mit Wicklungen. Der Rotor 6 ist mittels einer auf der Mantelfläche der Antriebswelle 1 sitzenden Klemmvorrichtung 4 drehfest an die Antriebswelle 1 angeschlossen. Die Klemmvorrichtung 4 ist als Konusspannelement zur reibschlüssigen und somit spielfreien Montage ausgebildet. Die Antriebswelle 1 ist an einem Anschlussende 1a einstückig und somit drehfest mit der Walze 30 integriert. Der Stator 5 wird drehfest gehalten, indem er mit dem Motorgehäuse 7 drehfest verbunden ist und das Motorgehäuse drehfest mit genau einem feststehenden Support 3 verbunden ist. Der Grund, warum das Motorgehäuse 7 nur an einer Stelle mit dem Support 3 verbunden ist, liegt in der Vermeidung von Spannungen, die bei mehrfacher Verbindung auftreten würden. Weiters ist zwischen Motorgehäuse 7 und dem feststehenden Support 3 ein elastisches Pufferelement 10 zwischengeschaltet. Durch die Befestigung des Motorgehäuses 7 am Support 3 sorgt das vom Motor eingebrachte Drehmoment für eine Drehbewegung der Antriebswelle 1. Besagter Support 3dient sinnvoller Weise zusätzlich zur Aufnahme eines antriebsseitigen Walzenlagers 2. Bei manchen Systemen mit Walzen oder Extrudern wird die Walze bzw. die Extruderschnecke nur durch ein antriebsseitiges Walzenlager 2 gelagert, wogegen bei anderen Systemen die Walze bzw. Extruderschnecke zweifach oder mehrfach gelagert ist.

Der Rotor 6 ist zweifach am Motorgehäuse 7 axial drehbar gelagert, und zwar einerseits mit einem dem Anschlussende 1a der Antriebswelle zugewandten Motorlager 8 und andererseits mit einem vom Anschlussende 1a der Antriebswelle abgewandten Motorlager 9. Beide Motorlager 8, 9 sind als Wälzlager ausgebildet. Die Antriebswelle 1 ist koaxial zum Rotor 6 durch den Antriebsmotor 18 hindurch und auf der dem Anschlussende 1a der Antriebswelle abgewandten Seite über den Antriebsmotor hinaus geführt, wo sie in einem freien Ende 1b mündet. Eine am freien Ende 1b angeordnete Passhülse 11 zwischen dem Rotor 6 und der Antriebswelle 1 dient zur koaxialen Zentrierung.

Die Antriebswelle 1 ist als Hohlwelle ausgebildet und weist einen axialen Temperiermediumkanal 1c auf, der am freien Ende 1b der Antriebswelle mit einem Temperiermediumanschluss 12, 13 gekoppelt ist, über den ein flüssiges oder gasförmiges Temperiermittel 16, d.h. Kühlmittel und/oder Heizmittel, wie z.B. Wasser, mittels einer Pumpe 17 in den Temperiermediumkanal 1c einspeisbar und/oder ableitbar ist. Dadurch kann die im Antrieb 20 entstehende Wärme direkt über das Temperiermedium 16 abgeführt werden. Der Temperiermediumkanal 1c der Antriebswelle 1 ist mit einem Temperiermediumkanal 31 der Walze 30 gekoppelt, so dass das Temperiermedium 16 in den und aus dem Temperiermediumkanal 31 der Walze 30 fließen kann. Der Temperiermediumanschluss ist zweiteilig ausgeführt und weist eine 1-Weg-Drehdurchführung 12 auf, die dicht mit dem Temperiermediumkanal 1c verbunden ist und sich koaxial mit der Antriebswelle 1 mitdreht. Das entgegengesetzte Ende der 1-Weg-Drehdurchführung 12 mündet in ein feststehendes Gehäuse 13, das über einen Einlass für das Temperiermedium 16 verfügt. Vorzugsweise ist die Fließrichtung des Temperiermediums 16 in den bzw. aus dem Temperiermediumkanal 1c der Antriebswelle 1 umschaltbar, beispielsweise durch Umkehr der Förderrichtung der Pumpe 17. Bei manchen Anwendungen, insbesondere bei Extrudern, kann auch eine 2-Weg-Drehdurchführung mit Hin- und Rücklauf für das Temperiermedium 16 vorgesehen sein.

Über der Mantelfläche der Antriebswelle 1, genau genommen am Rotor 5 nahe dem Motorlager 9 sitzt ein Drehzahlgeber 14 in Form eines ringförmigen Hohlwellenencoders, der die Antriebswelle 1 ringförmig umgibt und Information über die Drehzahl der Antriebswelle 1 über den elektrischen Anschluss 14 des Antriebes 20 an eine nicht dargestellte Maschinensteuerung weiterleitet.

## Patentansprüche

1. Antrieb (20) für eine Walze (30) oder Schnecke, eine Antriebswelle (1) und einen elektrischen Antriebsmotor (18) mit einem Rotor (6) und einem den Rotor umgebenden Stator (5) umfassend, wobei der Rotor (6) drehfest an die Antriebswelle (1) anschließbar ist, die Antriebswelle (1) an einem Anschlussende (1a) drehfest und koaxial mit der Walze oder Schnecke verbunden ist und der Stator (5) von einem feststehenden Bauteil des Antriebs drehfest gehalten wird, **dadurch gekennzeichnet, dass** der Rotor (6) mit einem dem Anschlussende (1a) der Antriebswelle zugewandten Motorlager (8) und mit einem vom Anschlussende (1a) der Antriebswelle abgewandten Motorlager (9) an einem Motorgehäuse (7) axial drehbar gelagert ist, und dass die Antriebswelle (1) koaxial zum Rotor (6) durch den Antriebsmotor (18) hindurch und auf der dem Anschlussende (1a) der Antriebswelle abgewandten Seite über den Antriebsmotor hinaus geführt ist, wo sie ein freies Ende (1b) aufweist, wobei die Antriebswelle als Hohlwelle mit einem axialen Temperiermediumkanal (1c) ausgebildet ist, der am freien Ende (1b) der Antriebswelle mit einem Temperiermediumanschluss (12, 13) gekoppelt ist.

2. Antrieb nach Anspruch 1, **dadurch gekennzeichnet, dass** der Temperiermediumkanal (1c) der Antriebswelle mit zumindest einem Temperiermediumkanal (31) der Walze oder Schnecke koppelbar ist.

3. Antrieb nach Anspruch 2, **dadurch gekennzeichnet, dass** der Temperiermediumanschluss (12) als 1-Weg-Drehdurchführung ausgebildet ist.

4. Antrieb nach Anspruch 2, **dadurch gekennzeichnet, dass** der Temperiermediumanschluss (12) als 2-Weg-Drehdurchführung ausgebildet ist.

5. Antrieb nach einem der vorhergehenden Ansprüche, **dadurch gekennzeichnet, dass** die Fließrichtung des Temperiermediums (16) in den bzw. aus dem Temperiermediumkanal (1c) der Antriebswelle umschaltbar ist, beispielsweise mittels einer Pumpe (17).

6. Antrieb nach einem der vorhergehenden Ansprüche, **gekennzeichnet durch** einen die Antriebswelle umgebenden Drehzahlgeber (14).

7. Antrieb nach einem der vorhergehenden Ansprüche, **dadurch gekennzeichnet, dass** der Stator (5) mit dem Motorgehäuse (7) drehfest verbunden ist und das Motorgehäuse drehfest mit genau einem feststehenden Support (3) verbindbar ist.

8. Antrieb nach Anspruch 7, **dadurch gekennzeichnet, dass** das Motorgehäuse (7) mit dem feststehenden Support (3) über ein zwischengeschaltetes, elastisches Pufferelement (10) verbunden ist.

9. Antrieb nach einem der vorhergehenden Ansprüche, **dadurch gekennzeichnet, dass** der Rotor (6) mit der Antriebswelle (1) mittels einer auf der Mantelfläche der Antriebswelle (1) sitzenden Klemmvorrichtung (4) verbunden ist.

10. Antrieb nach einem der vorhergehenden Ansprüche, **dadurch gekennzeichnet, dass** zwischen dem Rotor und der Antriebswelle eine Passhülse (11) angeordnet ist.

11. System (40) mit zumindest einer Kühlwalze, Gießwalze, Rolle, Glättwalze, Kalanderwalze und/oder Verstreckwalze, **dadurch gekennzeichnet dass** zumindest eine Walze (30) mit einer Antriebswelle (1) eines Antriebs (20) gemäß einem der Ansprüche 1 bis 10 verbunden ist.

12. Extruder mit einer Extruderschnecke, **dadurch gekennzeichnet, dass** die Extruderschnecke mit einer Antriebswelle (1) eines Antriebs (20) gemäß einem der Ansprüche 1 bis 10 verbunden ist.

## Claims

1. A drive (20) for a roll (30) or screw, comprising a drive shaft (1) and an electric drive motor (18) with a rotor (6) and a stator (5) surrounding the rotor, wherein the rotor (6) is attachable to the drive shaft (1) in a torque-proof manner, the drive shaft (1) is connected at a connection end (1a) to the roll or screw in a torque-proof and coaxial manner and the stator (5) is supported in a torque-proof manner by a stationary component of the drive, **characterized in that** the rotor (6) is axially pivoted on a motor casing (7) with an engine bearer (8) facing the connection end (1a) of the drive shaft and with an engine bearer (9) facing away from the connection end (1a) of the drive shaft, and that the drive shaft (1) is guided through the drive motor (18) coaxially to the rotor (6) and, on the side facing away from the connection end (1a) of the drive shaft, beyond the drive motor, where it has a free end (1b), the drive shaft being designed as a hollow shaft with an axial tempering medium channel (1c) which is coupled to a tempering medium connection (12, 13) at the free end (1b) of the drive shaft.

2. A drive according to claim 1, **characterized in that** the tempering medium channel (1c) of the drive shaft can be coupled to at least one tempering medium channel (31) of the roll or screw.

3. A drive according to claim 2, **characterized in that** the tempering medium connection (12) is designed as a 1-way rotary transmission leadthrough.

4. A drive according to claim 2, **characterized in that** the tempering medium connection (12) is designed as a 2-way rotary transmission leadthrough.

5. A drive according to any of the preceding claims, **characterized in that** the flow direction of the tempering medium (16) into and, respectively, out of the tempering medium channel (1c) of the drive shaft is reversible, for example, by means of a pump (17).

6. A drive according to any of the preceding claims, **characterized by** a speed sensor (14) surrounding the drive shaft.

7. A drive according to any of the preceding claims, **characterized in that** the stator (5) is connected to the motor casing (7) in a torque-proof manner and the motor casing is connectable to precisely one stationary support (3) in a torque-proof manner.

8. A drive according to claim 7, **characterized in that** the motor casing (7) is connected to the stationary support (3) via an interposed flexible buffer element (10).

9. A drive according to any of the preceding claims, **characterized in that** the rotor (6) is connected to the drive shaft (1) by means of a clamping device (4) located on the shell surface of the drive shaft (1).

10. A drive according to any of the preceding claims, **characterized in that** a fitting sleeve (11) is arranged between the rotor and the drive shaft.

11. A system (40) comprising at least one chill roll, casting roll, roll, smoothing roll, calender roll and/or stretching roll, **characterized in that** at least one roll (30) is connected to a drive shaft (1) of a drive (20) according to any of claims 1 to 10.

12. An extruder comprising an extruder screw, **characterized in that** the extruder screw is connected to a drive shaft (1) of a drive (20) according to any of claims 1 to 10.

## Revendications

1. Entraînement (20) destiné à un cylindre (30) ou à une vis sans fin, comprenant un arbre d'entraînement (1) et un moteur d'entraînement (18) électrique pourvu d'un rotor (6) et d'un stator (5) entourant le rotor, sachant que le rotor (6) peut être raccordé de manière solidaire en rotation à l'arbre d'entraînement (1), que l'arbre d'entraînement (1) est relié au niveau d'une extrémité de raccordement (1a) de manière solidaire en rotation et de manière coaxiale au cylindre ou à la vis sans fin et que le stator (5) est maintenu de manière solidaire en rotation par un élément immobile de l'entraînement, **caractérisé en ce que** le rotor (6) est monté de manière à pouvoir tourner axialement au niveau d'un carter de moteur (7) par un palier de moteur (8) tourné vers l'extrémité de raccordement (1a) de l'arbre d'entraînement et par un palier de moteur (9) opposé à l'extrémité de raccordement (1a) de l'arbre d'entraînement, et **en ce que** l'arbre d'entraînement (1) est guidé, de manière coaxiale par rapport au rotor (6), à travers le moteur d'entraînement (18) et sur le côté opposé à l'extrémité de raccordement (1a) de l'arbre d'entraînement au-delà du moteur d'entraînement, là où il présente une extrémité (1b) libre, sachant que l'arbre d'entraînement est réalisé sous la forme d'un arbre creux pourvu d'un canal axial de milieu de thermorégulation (1c), qui est couplé, au niveau de l'extrémité (1b) libre de l'arbre d'entraînement, à un raccord de milieu de thermorégulation (12, 13).

2. Entraînement selon la revendication 1, **caractérisé en ce que** le canal de milieu de thermorégulation (1c) de l'arbre d'entraînement peut être couplé à au moins un canal de milieu de thermorégulation (31) du cylindre ou de la vis sans fin.

3. Entraînement selon la revendication 2, **caractérisé en ce que** le raccord de milieu de thermorégulation (12) est réalisé sous la forme d'un passage rotatif à une voie.

4. Entraînement selon la revendication 2, **caractérisé en ce que** le raccord de milieu de thermorégulation (12) est réalisé sous la forme d'un passage rotatif à deux voies.

5. Entraînement selon l'une quelconque des revendications précédentes, **caractérisé en ce que** le sens d'écoulement du milieu de thermorégulation (16) rentrant dans ou sortant du canal de milieu de thermorégulation (1c) de l'arbre d'entraînement peut être modifié, par exemple au moyen d'une pompe (17).

6. Entraînement selon l'une quelconque des revendications précédentes, **caractérisé par** un capteur de vitesse de rotation (14) entourant l'arbre d'entraînement.

7. Entraînement selon l'une quelconque des revendications précédentes, **caractérisé en ce que** le stator (5) est relié de manière solidaire en rotation au carter de moteur (7), et **en ce que** le carter de moteur peut être relié de manière solidaire en rotation à précisément un support (3) immobile.

8. Entraînement selon la revendication 7, **caractérisé en ce que** le carter de moteur (7) est relié au support (3) immobile par l'intermédiaire d'un élément d'amortissement (10) élastique intercalé.

9. Entraînement selon l'une quelconque des revendications précédentes, **caractérisé en ce que** le rotor (6) est relié à l'arbre d'entraînement (1) au moyen d'un dispositif de serrage (4) reposant sur la surface extérieure de l'arbre d'entraînement (1).

10. Entraînement selon l'une quelconque des revendications précédentes, **caractérisé en ce qu'**une douille d'ajustement (11) est disposée entre le rotor et l'arbre d'entraînement.

11. Système (40) comprenant au moins un cylindre de refroidissement, un cylindre de coulée, un galet, un cylindre de lissage, un cylindre de calandrage et/ou un cylindre d'étirage, **caractérisé par** au moins un cylindre (30) pourvu d'un arbre d'entraînement (1) d'un entraînement (20) selon l'une quelconque des revendications 1 à 10.

12. Extrudeuse pourvue d'une vis sans fin d'extrudeuse, **caractérisée en ce que** la vis sans fin d'extrudeuse est reliée à un arbre d'entraînement (1) d'un entraînement (20) selon l'une quelconque des revendications 1 à 10.
